# EUROPÄISCHE PATENTSCHRIFT

(11) **EP 3 862 228 B1**
(45) Veröffentlichungstag und Bekanntmachung des Hinweises auf die Patenterteilung: **28.12.2022**
(21) Anmeldenummer: 21155417.5
(22) Anmeldetag: 05.02.2021
(51) Int. Cl.: B60R 1/06, B60R 1/074, F16J 15/3236

(54) **AUSSENSPIEGELVORRICHTUNG**
EXTERIOR REARVIEW MIRROR
DISPOSITIF DE MIROIR EXTÉRIEUR

(30) Priorität: 07.02.2020 DE 102020201511
(43) Veröffentlichungstag der Anmeldung: 11.08.2021
(73) Patentinhaber: Volkswagen Aktiengesellschaft, 38440 Wolfsburg (DE)
(72) Erfinder: Gresens, Toralf, 38165 Flechtorf (DE); Döhlert, Steffen, 39130 Magdeburg (DE)
(74) Vertreter: Clarenbach, Carl-Philipp

(56) Entgegenhaltungen:
- EP-A1- 2 949 512
- CN-U- 205 417 375
- US-A1- 2004 104 539
- US-A1- 2019 193 635
- US-A1- 2019 193 636

## Beschreibung

Die Erfindung betrifft eine Außenspiegelvorrichtung für ein Fahrzeug, insbesondere Kraftfahrzeug, mit einem an dem Fahrzeug befestigbaren Spiegelfuß und mit einem an dem Spiegelfuß um eine Schwenkachse verschwenkbar gelagerten Spiegelkopf, wobei zwischen dem Spiegelfuß und dem Spiegelkopf ein elastisch verformbares Dichtelement angeordnet ist, das im Querschnitt gesehen zwei Dichtarme aufweist, wobei ein erster Dichtarm dichtend an dem Spiegelkopf und ein zweiter Dichtarm dichtend an dem Spiegelfuß anliegt.

Außenspiegelvorrichtungen der eingangs genannten Art sind aus dem Stand der Technik bereits bekannt. So zeigt beispielsweise die Offenlegungsschrift EP 2 949 512 A1 eine Außenspiegelvorrichtung für ein Kraftfahrzeug mit einem Spiegelkopf und einem Spiegelfuß, zwischen denen ein elastisch verformbares Dichtelement angeordnet ist. Durch das Dichtelement wird ein Durchströmen von Luft sowie ein Eindringen von Feuchtigkeit und Schmutz in den Raum zwischen Spiegelfuß und Spiegelkopf vermieden, in welchem üblicherweise ein Schwenkgelenk ausgebildet ist, durch welchen der Spiegelkopf an dem Spiegelfuß verschwenkbar gelagert ist. Durch das Dichtelement wird somit gewährleistet, dass insbesondere das Schwenkgelenk nicht durch äußere Einflüsse verschmutzt oder beschädigt werden kann. Auch verringert das Dichtelement in vorteilhafter Weise Luftgeräusche, die durch Fahrtwind entstehen können. Durch das Schwenkgelenk ist insbesondere ein Anklappen des Spiegelkopfes an das Fahrzeug ermöglicht, sodass die Gesamtbreite des Fahrzeugs durch den angeklappten Spiegelkopf verringert ist, um beispielsweise die Gefahr einer Beschädigung des Spiegelkopfes durch andere Verkehrsteilnehmer zu reduzieren. Damit wird zwischen dem Spiegelkopf und dem Spiegelfuß bei einem Anklappvorgang eine Relativbewegung zwischen Spiegelkopf und Spiegelfuß ausgeführt, welche sich auf das dazwischenliegende Dichtelement auswirkt. Insbesondere bei einem Anklappvorgang, bei welchem der Spiegelkopf um einen weiten Weg relativ zu dem Spiegelfuß verschwenkt wird, kann es dabei zu einer erhöhten Belastung des Dichtelements kommen, die auch dadurch resultieren kann, dass die Drehebene, innerhalb der der Spiegelkopf bezüglich des Spiegelfußes verschwenkt wird, nicht deckungsgleich mit der Ebene der Dichtungsflächen des Dichtelements ist. Dadurch kommt es oder kann es zu einem Stauchen oder Strecken des Dichtelements bei einem entsprechenden Schwenkvorgang des Spiegelkopfes kommen. Insbesondere können beim Verschwenken auch Geräusche auftreten, die unangenehm in Erscheinung treten.

Der Erfindung liegt daher die Aufgabe zugrunde, eine verbesserte Außenspiegelvorrichtung zu schaffen, die trotz einer Beanspruchung des Dichtelements bei einer Verschwenkbewegung des Spiegelkopfes eine Überanspruchung des Dichtelements vermeidet und insbesondere eine unangenehme Geräuschentwicklung verhindert.

Die Offenlegungsschrift US 2019 / 193 635 A1 offenbart, gemäß dem Oberbegriff des Patentanspruchs 1, eine Außenspiegelvorrichtung für ein Fahrzeug mit einem an dem Fahrzeug befestigbaren Spiegelfuß und mit einem an dem Spiegelfuß um eine Schwenkachse verschwenkbar gelagerten Spiegelkopf. Dabei ist vorgesehen, dass zwischen dem Spiegelfuß und dem Spiegelkopf ein elastisch verformbares Dichtelement 42 angeordnet ist. Das Dichtelement ist dabei an einem Außengehäuseteil des Spiegelkopfes befestigt. Weitere Außenspiegelvorrichtungen sind aus den Offenlegungsschriften US 2004 / 104 539 A1, US 2019 / 193 636 A1, sowie CN 205 417 375 U bekannt.

Die der Erfindung zugrundeliegende Aufgabe wird durch eine Außenspiegelvorrichtung mit den Merkmalen des Anspruchs 1 gelöst. Diese hat den Vorteil, dass dem Dichtelement ein Ausweichraum zur Verfügung gestellt wird, in welchen das Dichtelement sich verformen kann, ohne dass es durch die Verschwenkung des Spiegelkopfes überansprucht wird. Dadurch ergibt sich, dass die zwischen dem Dichtelement und dem Spiegelfuß und dem Spiegelkopf wirkenden Anpresskräfte derart gering gehalten werden können, dass insbesondere störende Geräusche aufgrund hoher Anpresskräfte vermieden werden. Erfindungsgemäß ist hierzu vorgesehen, dass die Dichtarme beabstandet zueinander einander gegenüberliegend verlaufen, und dass zumindest einer der Dichtarme eine dem anderen der Dichtarme zugewandte Vertiefung aufweist, in welche der andere Dichtarm zumindest bereichsweise hineinfedern kann. Die Vertiefung des einen Dichtarms bietet somit den zuvor erwähnten Aufnahmeraum oder Ausweichraum, in welchen der andere der Dichtarme verlagerbar ist, wenn beispielsweise aufgrund einer Schwenkbewegung des Spiegelkopfes der Spiegelkopf in Richtung des Spiegelfußes bewegt wird. Auch wird dadurch erreicht, dass das Dichtelement aufgrund der wirkenden Reibkräfte bereichsweise mit dem anderen Arm in den einen Arm hinein federn kann. So wird auch bei einer reinen Schwenkbewegung, bei welcher der Abstand zwischen Spiegelkopf und Spiegelfuß nicht verändert wird, eine Überanspruchung des Dichtelements und insbesondere eine Geräuscherzeugung verhindert.

Gemäß einer bevorzugten Ausführungsform der Erfindung ist das Dichtelement im Querschnitt gesehen U- oder V-förmig ausgebildet, wobei die beiden Dichtarme jeweils ein freies Ende und jeweils ein mit dem jeweils anderen Dichtarm verbundenes Ende aufweisen. Durch die vorteilhafte Querschnittsform ist das Dichtelement kostengünstig herstellbar und einfach montierbar. Durch die V- oder U-Form können die Anpresskräfte an Spiegelfuß und Spiegelkopf in vorteilhafter Weise eingestellt werden. Außerdem ergibt sich durch die vorteilhafte Querschnittsform, dass die Dichtarme bereichsweise einander gegenüberliegend verlaufen, wobei die Dichtarme in der U-Formierung zumindest abschnittsweise parallel zueinander verlaufen.

Weiterhin ist bevorzugt vorgesehen, dass der zweite Dichtarm, also der dem Spiegelfuß zugeordnete Dichtarm, die Vertiefung aufweist. Die Vertiefung ist dabei auf der von dem Spiegelfuß abgewandten Seite des Dichtarms ausgebildet, sodass der erste Dichtarm in die Vertiefung des zweiten Dichtarms einfedern kann. Hierdurch ist eine vorteilhaft bauraumsparende Ausbildung des Dichtelements mit den vorgenannten Vorteilen gewährleistet. Gemäß einer alternativen Ausführungsform der Erfindung weist der dem Spiegelkopf zugeordnete Dichtarm die Vertiefung auf, wodurch insbesondere der Vorteil erreicht wird, dass sich in der Vertiefung des Dichtarms keine Feuchtigkeit oder Flüssigkeit oder Schmutz sammeln kann, weil die Vertiefung in der Regel beziehungsweise bei bestimmungsgemäßem Gebrauch der Außenspiegelvorrichtung nach unten weist, sodass Flüssigkeit oder Schmutz aus der Vertiefung herausfallen würden.

Weiterhin ist bevorzugt vorgesehen, dass das Dichtelement an Außengehäuseteilen von Spiegelfuß und Spiegelkopf dichtend anliegt. Damit wirkt das Dichtelement vorteilhaft mit Spiegelfuß und Spiegelkopf zusammen und verhindert, dass Flüssigkeit, Feuchtigkeit oder Schmutz in das Innere der Gehäuse von Spiegelfuß oder Spiegelkopf gelangen kann.

Weiterhin ist erfindungsgemäß vorgesehen, dass das Dichtelement an einem in dem Spiegelfuß angeordneten Gehäuseteil von dem Spiegelfuß befestigt ist. Das Dichtelement ist somit an dem Spiegelfuß festgelegt, wobei die Befestigung nicht an dem Außengehäuseteil des Spiegelfußes stattfindet, an welchem das Dichtelement dichtend anliegt. Dadurch erfolgt eine vorteilhafte Trennung der Funktionen, nämlich der Befestigung und Halterung des Dichtelements einerseits und der zu gewährleistenden Dichtung andererseits. Damit können unterschiedliche Abschnitte des Dichtelements auf ihre Funktion optimiert ausgebildet werden, um eine hohe Lebensdauer des Dichtelements und damit der Außenspiegelvorrichtung insgesamt zu gewährleisten.

Besonders bevorzugt ist das Dichtelement kreisringförmig ausgebildet und koaxial zu der Schwenkachse der Außenspiegelvorrichtung angeordnet. Dadurch schließt das Dichtelement einen nach außen abgedichteten Raum zwischen Spiegelfuß und Spiegelkopf ein, in welchem insbesondere das Schwenkgelenk der Außenspiegelvorrichtung angeordnet oder ausgebildet ist. Dadurch wird in vorteilhafter Weise das Eindringen von Flüssigkeiten und/oder Schmutz in den Raum insgesamt sicher vorteilhaft verhindert. Auch das Entstehen von Luftgeräuschen zwischen Spiegelfuß und Spiegelkopf wird dadurch vorteilhaft verhindert.

Weiterhin ist bevorzugt vorgesehen, dass sich die Vertiefung des einen Dichtarms über einen begrenzten Umfangsabschnitt des Dichtelements erstreckt. Dabei wird in diesem Fall der Umfangsabschnitt als Abschnitt entlang der Kreisringform des Dichtelements verstanden. Die Vertiefung liegt somit bevorzugt nur in einem Bereich des Dichtelements vor, in welchem mit einer Verformung des Dichtelements zur Vermeidung von einer Überanspruchung des Dichtelements und/oder zur Vermeidung von Geräuschen beim Verschwenken des Spiegelkopfes zu erwarten ist. Dadurch ergibt sich der Vorteil, dass dem übrigen Umfangsabschnitt des Dichtelements das Dichtelement eine hohe Steifigkeit aufweist, die zu einer erhöhten Anpresskraft und damit zu einem sicheren Abdichten zwischen Spiegelkopf und Spiegelfuß führt.

Alternativ ist bevorzugt vorgesehen, dass sich die Vertiefung über den gesamten Umfang des Dichtelements ringförmig erstreckt, sodass eine Falschmontage des Dichtelements vorteilhaft verhindert ist und die gewünschte Wirkung, das Vermeiden von Geräuschen sowie eine Überanspruchung des Dichtelements, in jedem Fall sicher gewährleistet ist.

Im Folgenden soll die Erfindung anhand der Zeichnungen näher erläutert werden. Dazu zeigen
- Figur 1: eine vorteilhafte Außenspiegelvorrichtung in einer perspektivischen Darstellung und
- Figur 2: eine vereinfachte Schnittdarstellung der Außenspiegelvorrichtung.

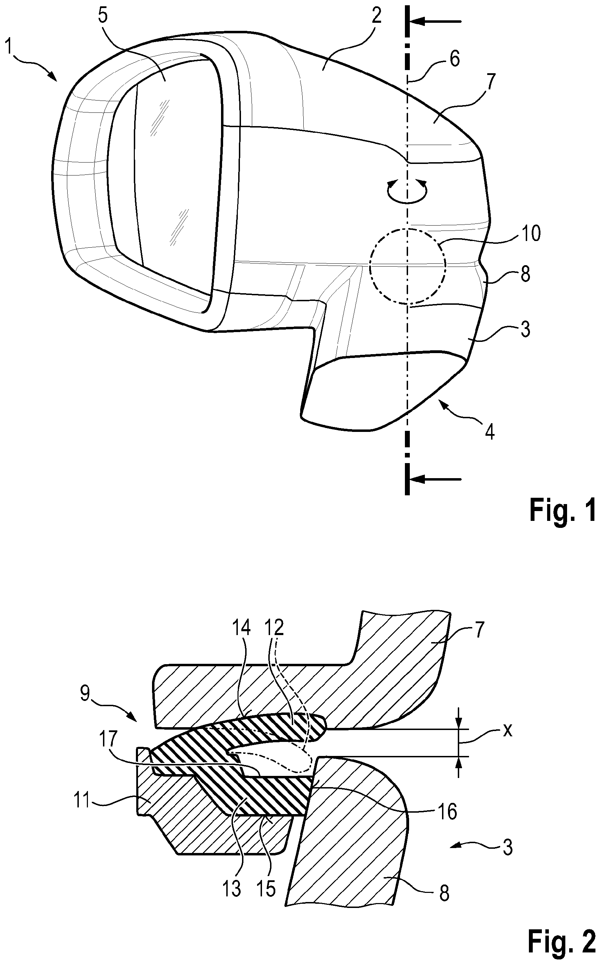

Figur 1 zeigt in einer vereinfachten perspektivischen Darstellung eine vorteilhafte Außenspiegelvorrichtung 1 eines hier nicht näher dargestellten Kraftfahrzeugs. Die Außenspiegelvorrichtung 1 weist einen Spiegelkopf 2 und einen Spiegelfuß 3 auf. Der Spiegelfuß 3 weist Mittel 4 zur Befestigung an einer Karosserie des Kraftfahrzeugs auf. Der Spiegelkopf 2 trägt ein Spiegelelement 5 und ist um eine Schwenkachse 6 verschwenkbar an dem Spiegelfuß 3 gelagert. Insbesondere ist das die Schwenkachse 6 definierende Schwenkgelenk derart ausgebildet, dass der Spiegelkopf 2 von der in Figur 1 gezeigten Gebrauchsposition in eine um etwa 90° verschwenkte Nicht-Gebrauchsposition an das Kraftfahrzeug anklappbar ist. Sowohl der Spiegelkopf 2 als auch der Spiegelfuß 3 weisen jeweils Außengehäuseteile 7 beziehungsweise 8 auf, die das jeweilige Außengehäuse von Spiegelfuß 3 beziehungsweise Spiegelkopf 2 bilden und insoweit auch als Dekorelemente eingesetzt sind. Dabei sind die Außengehäuseteile 7, 8 derart ausgebildet, dass sich eine vorteilhafte Luftströmung an der Außenspiegelvorrichtung 1 durch den Fahrtwind einstellt, wodurch insbesondere ein vorteilhaft geringer Windwiderstand erzielt und eine Geräuschentwicklung vermieden werden.

Die Außengehäuseteile 7, 8 liegen dabei nahe zueinander, um eine möglichst kompakte Ausbildung der Außenspiegelvorrichtung 1 zu erreichen. Um zu vermeiden, dass ein Luftstrom, Feuchtigkeit, Flüssigkeit oder Schmutz in den Raum zwischen Spiegelfuß 3 und Spiegelkopf 2 gelangen kann, ist zwischen diesen ein Dichtelement 9 angeordnet.

Figur 2 zeigt dazu eine vergrößerte Detailansicht der Außenspiegelvorrichtung 1 in einem, wie durch einen in Figur 1 gestrichelten Kreis 10 angezeigten Bereich, zwischen den Außengehäuseteilen 7, 8. Figur 2 zeigt eine Längsschnittdarstellung, in welcher Abschnitte der Außengehäuseteile 7 und 8 sowie ein Gehäuseteil 11 des Spiegelfußes 3 gezeigt sind. Das Gehäuseteil 11 und der Spiegelfuß 3 ist dabei im Inneren des Spiegelfußes 3 angeordnet und stellt ein Trägerelement oder Strukturbauteil vom Spiegelfuß 3 dar. Die Außengehäuseteile 7, 8 weisen einen Mindestabstand x zwischen ihren einander zugewandten Oberflächen auf. An dem Gehäuseteil 11 ist das Dichtelement 9 befestigt. Damit ist das Dichtelement 9 drehfest mit dem Spiegelfuß 3 verbunden, sodass bei einem Verschwenken des Spiegelkopfes 2 eine Relativbewegung zwischen dem Spiegelkopf 2 einerseits und dem Spiegelfuß 3 mit dem Dichtelement 9 andererseits erfolgt. Das Dichtelement 9 ist kreisringförmig ausgebildet und weist im Querschnitt ein V-förmiges Profil, wie in Figur 2 gezeigt, auf. Dadurch weist das Dichtelement 9 zwei Dichtarme 12, 13 auf, die einander gegenüberliegend beabstandet zueinander verlaufen. Dabei liegt der Dichtarm 12 mit seiner von dem Dichtarm 13 abgewandten Dichtfläche 14 an dem Außengehäuseteil 7 des Spiegelkopfes 2 an. Der Dichtarm 13 liegt wiederum mit einer von dem Dichtarm 12 abgewandten Dichtfläche 15 an dem Gehäuseteil 11 sowie mit einer stirnseitigen Dichtfläche 16 an dem Außengehäuseteil 8 jeweils dichtend an.

Das Dichtelement 9 ist insgesamt elastisch verformbar ausgebildet und ist dazu beispielsweise aus einem Elastomermaterial gefertigt. Insbesondere ist dabei das Dichtelement 9 derart zwischen den Außengehäuseteilen 7, 8 gehalten, dass es unter elastischer Verformung vorgespannt ist, wodurch ein sicheres dichtendes Anliegen der Dichtflächen 15, 14 und 16 an den Außengehäuseteilen 7, 8 beziehungsweise an dem Gehäuseteil 11 gewährleistet ist.

Gemäß dem vorliegenden Ausführungsbeispiel weist der dem Spiegelfuß 3 zugeordnete Dichtarm 13 auf seiner dem Dichtarm 12 zugewandten Seite eine Aussparung oder Vertiefung 17 auf, die dazu ausgebildet ist, den gegenüberliegenden Dichtarm 12 zumindest bereichsweise aufzunehmen.

Wird der Spiegelkopf 2 relativ zu dem Spiegelfuß 3 um die Schwenkachse 6 herum verschwenkt, so wird das dazwischenliegende Dichtelement 9 durch Reibkräfte und Druckkräfte, die bei dem Verschwenken auftreten, beaufschlagt. Die vorteilhafte Vertiefung 17 erlaubt es, dass bei einer derartigen Kraftbeaufschlagung des Dichtarms 12 dieser in Richtung des Dichtarms 13 elastisch verlagert werden kann, wie durch gestrichelte Linien in Figur 2 angedeutet. Dadurch kann der Dichtarm 12 in die Vertiefung 17 ausweichen, ohne dass er überansprucht wird. Insbesondere wird dabei außerdem erreicht, dass aufgrund der Ausweichmöglichkeit für den Dichtarm 12 verhindert wird, dass derart hohe Anpresskräfte zwischen dem Dichtarm 12 und dem Außengehäuseteil 7 entstehen können, die bei einer Relativbewegung zwischen dem Außengehäuseteil 7 und dem Dichtelement 9 zu einer unangenehmen Geräuschentwicklung führen könnten.

### Bezugszeichenliste

- 1: Außenspiegelvorrichtung
- 2: Spiegelkopf
- 3: Spiegelfuß
- 4: Mittel
- 5: Spiegelelement
- 6: Schwenkachse
- 7: Außengehäuseteil
- 8: Außengehäuseteil
- 9: Dichtelement
- 10: Kreis
- 11: Gehäuseteil
- 12: Dichtarm
- 13: Dichtarm
- 14: Dichtfläche
- 15: Dichtfläche
- 16: Dichtfläche
- 17: Vertiefung

## Patentansprüche

1. Außenspiegelvorrichtung (1) für ein Fahrzeug, insbesondere Kraftfahrzeug, mit einem an dem Fahrzeug befestigbaren Spiegelfuß (3) und mit einem an dem Spiegelfuß (3) um eine Schwenkachse (6) verschwenkbar gelagerten Spiegelkopf (2), wobei zwischen dem Spiegelfuß (3) und dem Spiegelkopf (2) ein elastisch verformbares Dichtelement (9) angeordnet ist, das im Querschnitt gesehen zwei Dichtarme (12,13) aufweist, wobei ein erster Dichtarm (12) dichtend an dem Spiegelkopf (2) und ein zweiter Dichtarm (13) dichtend an dem Spiegelfuß (3) anliegt, **dadurch gekennzeichnet, dass** die Dichtarme (12,13) beabstandet zueinander einander gegenüberliegend verlaufen, und dass zumindest einer der Dichtarme (13) eine dem anderen der Dichtarme (12) zugewandte Vertiefung (17) aufweist, in welche der andere Dichtarm (12) zumindest bereichsweise hineinfedern kann, wobei der Spiegelkopf (2) und der Spiegelfuß (3) jeweils ein Außengehäuseteil (7,8) aufweisen, und dass das Dichtelement (9) an einem in dem Spiegelfuß (3) angeordneten und als Trägerelement oder Strukturbauteil ausgebildeten Gehäuseteil (11) von dem Spiegelfuß (3) befestigt ist.

2. Außenspiegelvorrichtung nach Anspruch 1, **dadurch gekennzeichnet, dass** das Dichtelement (9) im Querschnitt gesehen U- oder V-förmig ausgebildet ist.

3. Außenspiegelvorrichtung nach einem der vorhergehenden Ansprüche, **dadurch gekennzeichnet, dass** der zweite Dichtarm (13) die Vertiefung (17) aufweist.

4. Außenspiegelvorrichtung nach einem der vorhergehenden Ansprüche, **dadurch gekennzeichnet, dass** das Dichtelement (9) an Außengehäuseteilen (7,8) von Spiegelfuß (3) und Spiegelkopf (2) dichtend anliegt.

5. Außenspiegelvorrichtung nach einem der vorhergehenden Ansprüche, **dadurch gekennzeichnet, dass** das Dichtelement (9) kreisringförmig ausgebildet und koaxial zu der Schwenkachse (6) angeordnet ist.

6. Außenspiegelvorrichtung nach einem der vorhergehenden Ansprüche, **dadurch gekennzeichnet, dass** sich die Vertiefung (17) des einen Dichtarms (13) über einen begrenzten Umfangsabschnitt des Dichtelements (9) erstreckt.

7. Außenspiegelvorrichtung nach einem der vorhergehenden Ansprüche, **dadurch gekennzeichnet, dass** sich die Vertiefung (17) über den gesamten Umfang des Dichtelements (9) ringförmig erstreckt.

## Claims

1. Exterior mirror device (1) for a vehicle, in particular a motor vehicle, having a mirror base (3) that can be fastened to the vehicle and having a mirror head (2) mounted on the mirror base (3) so as to be pivotable about a pivot axis (6), an elastically deformable sealing element (9) being arranged between the mirror base (3) and the mirror head (2), which sealing element has two sealing arms (12, 13) when viewed in cross section, a first sealing arm (12) sealingly abutting the mirror head (2) and a second sealing arm (13) sealingly abutting the mirror base (3), **characterized in that** the sealing arms (12, 13) extend opposite one another at a distance from one another, and **in that** at least one of the sealing arms (13) has a depression (17) which faces the other of the sealing arms (12) and into which the other sealing arm (12) can deflect at least in regions, the mirror head (2) and the mirror base (3) each having an outer housing part (7, 8), and **in that** the sealing element (9) is fastened to a housing part (11) of the mirror base (3) arranged in the mirror base (3) and designed as a carrier element or structural component.

2. Exterior mirror device according to claim 1, **characterized in that** the sealing element (9) is U-shaped or V-shaped in cross section.

3. Exterior mirror device according to either of the preceding claims, **characterized in that** the second sealing arm (13) has the depression (17).

4. Exterior mirror device according to any of the preceding claims, **characterized in that** the sealing element (9) sealingly abuts outer housing parts (7, 8) of the mirror base (3) and the mirror head (2).

5. Exterior mirror device according to any of the preceding claims, **characterized in that** the sealing element (9) is annular and is arranged coaxially to the pivot axis (6).

6. Exterior mirror device according to any of the preceding claims, **characterized in that** the depression (17) of one sealing arm (13) extends over a limited circumferential portion of the sealing element (9).

7. Exterior mirror device according to any of the preceding claims, **characterized in that** the depression (17) extends annularly over the entire circumference of the sealing element (9).

## Revendications

1. Dispositif de rétroviseur extérieur (1) pour un véhicule, en particulier un véhicule à moteur, comprenant une base de miroir (3) fixée sur le véhicule et une tête de miroir (2) disposée sur la base de miroir (3) de manière à pouvoir pivoter autour d'un axe de pivotement (6), dans lequel, entre la base de miroir (3) et la tête de miroir (2), un élément d'étanchéité (9) élastiquement déformable est agencé, qui présente, vu en section transversale, deux bras d'étanchéité (12, 13), dans lequel un premier bras d'étanchéité (12) repose de manière étanche sur la tête de miroir (2) et un second bras d'étanchéité (13) repose de manière étanche sur la base de miroir (3), **caractérisé en ce que** les bras d'étanchéité (12, 13) s'étendent de manière opposée espacés l'un de l'autre et **en ce qu'**au moins un des bras d'étanchéité (13) présente un renfoncement (17) orienté vers l'autre des bras d'étanchéité (12), dans lequel l'autre bras d'étanchéité (12) peut s'introduire avec suspension au moins par zones, dans lequel la tête de miroir (2) et la base de miroir (3) présentent respectivement une partie de boîtier extérieur (7, 8) et **en ce que** l'élément d'étanchéité (9) est fixé à une partie de boîtier (11) de la base de miroir (3) agencée dans la base de miroir (3) et conçue comme élément support ou composant structural.

2. Dispositif de rétroviseur extérieur selon la revendication 1,
**caractérisé en ce que** l'élément d'étanchéité (9), vu en section transversale, est conçu en forme de U ou de V.

3. Dispositif de rétroviseur extérieur selon l'une quelconque des revendications précédentes, **caractérisé en ce que** le deuxième bras d'étanchéité (13) présente le renfoncement (17).

4. Dispositif de rétroviseur extérieur selon l'une quelconque des revendications précédentes, **caractérisé en ce que** l'élément d'étanchéité (9) repose de manière étanche sur les parties de boîtier extérieur (7, 8) de la base de miroir (3) et de la tête de miroir (2).

5. Dispositif de rétroviseur extérieur selon l'une quelconque des revendications précédentes, **caractérisé en ce que** l'élément d'étanchéité (9) est conçu de forme circulaire et est agencé coaxial par rapport à l'axe de pivotement (6).

6. Dispositif de rétroviseur extérieur selon l'une quelconque des revendications précédentes, **caractérisé en ce que** le renfoncement (17) dudit bras d'étanchéité (13) s'étend sur une section périphérique limitée de l'élément d'étanchéité (9).

7. Dispositif de rétroviseur extérieur selon l'une quelconque des revendications précédentes, **caractérisé en ce que** le renfoncement (17) s'étend selon une forme annulaire sur toute la périphérie de l'élément d'étanchéité (9).
